# FASCICULE DE BREVET EUROPEEN

(11) **EP 1 399 264 B1**
(45) Date de publication et mention de la délivrance du brevet: **16.11.2005**
(21) Numéro de dépôt: 02751253.2
(22) Date de dépôt: 17.06.2002
(51) Int. Cl.: B03C 1/035, B03C 1/23, G01N 35/00

(54) **PROCEDE, DISPOSITIF, ET EQUIPEMENT DE SEPARATION PAR VOIE HUMIDE DE MICRO PARTICULES MAGNETIQUES**
VERFAHREN, VORRICHTUNG UND EINRICHTUNG ZUR NASSTRENNUNG VON MAGNETISCHEN MIKROTEILCHEN
METHOD, DEVICE AND EQUIPMENT FOR THE WET SEPARATION OF MAGNETIC MICROPARTICLES

(30) Priorité: 27.06.2001 FR 0108496
(43) Date de publication de la demande: 24.03.2004
(73) Titulaire: BIOMERIEUX, 69280 Marcy-L'Etoile (FR); COMMISSARIAT A L'ENERGIE ATOMIQUE, 75015 Paris (FR)
(72) Inventeur: BROYER, Patrick, F-01700 Beynost (FR); JEANDEY, Christian, F-38120 Saint Egreve (FR)
(74) Mandataire: Maureau, Philippe
(86) Numéro de dépôt international: PCT/FR2002/002082
(87) Numéro de publication internationale: WO 2003/002260

(56) Documents cités:
- WO-A-98/55236
- GB-A- 2 333 978

## Description

La présente invention concerne de manière générale une séparation dynamique par voie humide d'une suspension en phase liquide, comprenant, d'une part des micro-particules magnétiques, c'est à dire comprenant un matériau magnétique, et d'autre part un milieu liquide dans lequel lesdites particules sont suspendues.

Par « micro-particules », on entend des particules dont la taille n'excède pas quelques microns. Selon la présente invention, les micro-particules considérées comprennent par exemple chacune, un grain enveloppé par un matériau polymère, en un matériau magnétique.

Le matériau magnétique peut être de deux constitutions principales, à savoir :
- un matériau aimanté de manière permanente, ou ferromagnétique dur, par exemple ferrite dure, auquel cas les grains ont une taille au moins égale à quelques µm,
- ou un matériau magnétisable dans tout champ magnétique, ou super-paramagnétique, auquel cas les grains ont une taille au plus égale à quelques dizaines de nm.

S'agissant de micro-particules super-paramagnétiques, différents documents, dont US-C-4795 698, décrivent celles-ci, lesquelles sont par ailleurs disponibles chez différents fabricants, et/ou sous différentes marques telles que SERADYN, IMMUNICON, etc.

Il existe par ailleurs des particules magnétiques thermosensibles, selon la demande de brevet WO-A-99/35500 dont l'une des Demanderesses est titulaire, qui peuvent également être utilisées.

Lorsque ces micro-particules sont fonctionnalisées, c'est à dire liées à des réactifs ou entités de type biologique, biochimique, ou chimique, ou d'une autre nature, en un ou plusieurs sites extérieurs d'une même particule, les micro-particules fonctionnalisées ainsi obtenues ont un grand intérêt, en ce qu'elles permettent notamment de pratiquer par voie automatisée des déterminations, notamment des dosages biologiques et des dosages immunologiques.

Préférentiellement, les réactifs sont alors des entités du type antigène, anticorps, fragment d'anticorps, haptène, vitamine, protéine, polypeptide, peptide, récepteur, enzyme, acide nucléique, oligo et polynucléotides, etc.

Les réactifs sont à leur tour aptes à réagir avec des entités biologiques d'intérêt.

Dans une application de type dosage, où les micro-particules sont mises en contact avec un échantillon contenant des entités biologiques d'intérêt, il est alors nécessaire, à un moment ou à un autre de ce dernier, de séparer la suspension en phase liquide des micro-particules, d'une part en une phase solide enrichie en micro-particules et donc en entités biologiques d'intérêt, et d'autre part en une phase liquide appauvrie en micro-particules.

Compte tenu de la nature magnétique des micro-particules, une telle phase de séparation est effectuée avec des moyens magnétiques.

A cette fin, conformément au document US-C- 5795 470 (cf. Figure 13) :
a) on confine la suspension dans une enceinte dont le volume est déterminé par au moins deux dimensions ou directions, à savoir une dimension de référence, correspondant à la direction de circulation d'un échantillon de la suspension, et une dimension transversale ou perpendiculaire à la dimension de référence, par exemple profondeur,
b) on dispose au travers de ladite enceinte un champ magnétique de capture, résultant de la somme vectorielle de deux pluralités ou rangées, parallèles et espacées, de champs magnétiques élémentaires alternés, disposées de part et d'autre de l'enceinte selon la dimension transversale, lesdits champs magnétiques élémentaires, parallèles chacun à la dimension transversale, étant distribués dans chaque rangée selon une dimension perpendiculaire aux dimensions de référence et transversale ; le champ magnétique de capture ainsi obtenu exerce sur les micro-particules une attraction magnétique, dont une composante majoritaire, par exemple la totalité, est dirigée selon la dimension transversale, respectivement contre les deux faces de l'enceinte de part et d'autre de la dimension transversale,
c) on génère le champ magnétique de capture, en plaçant l'enceinte entre les deux rangées de champs magnétiques élémentaires, moyennant quoi une phase solide enrichie en micro-particules est capturée dans l'enceinte, de manière dynamique ou statique, et on évacue de cette dernière une phase liquide appauvrie en micro-particules,
d) en écartant l'enceinte des deux rangées de champs magnétiques élémentaires, on libère la phase solide enrichie en micro-particules, par exemple au moyen d'un milieu liquide de relargage ou remise en suspension.

Selon la solution précédemment décrite, les champs magnétiques élémentaires génèrent, par leur somme vectorielle, non seulement le champ magnétique de capture, mais également des champs magnétiques de fuite, dans l'environnement de l'enceinte de séparation de la suspension de micro-particules. Conséquemment, d'une part cette technique ne peut être pratiquée que sur une seule et même enceinte isolée, et d'autre part cette technique est exclue pour toute mise en oeuvre automatisée et groupée, par exemple de cartes d'analyse disposées verticalement sur leur tranche, et mises parallèlement côte à côte, à faible distance (moins de 3 cm par exemple) les unes des autres.

La présente invention vise à remédier à cet inconvénient. La présente invention a en particulier pour objet une technique de séparation, permettant de confiner le champ magnétique de capture, pratiquement dans l'enceinte de séparation de la suspension de micro-particules, quelles que soient les dimensions de ladite enceinte, dans certaines limites.

Un procédé de séparation dynamique par voie humide d'une suspension en phase liquide comprenant des micro-particules magnétique est décrit dans le document GB-A-2 333 978.

La présente invention concerne un procédé du genre défini précédemment, selon lequel :
a) on confine la suspension dans une enceinte d'un volume déterminé par au moins deux dimensions, par exemple longueur et profondeur,
b) on dispose d'au moins une pluralité de champs magnétiques élémentaires, distribués selon une demi-configuration dite de Halbach, dont les extrémités respectives en regard de l'enceinte, génèrent une somme vectorielle desdits champs magnétiques élémentaires, correspondant à un champ magnétique de capture traversant ladite enceinte, et exerçant sur les micro-particules une attraction magnétique, et dont les extrémités respectives opposées ne génèrent aucun champ magnétique.
c) on génère ledit champ magnétique de capture, moyennant quoi une phase solide enrichie en micro-particules est capturée dans ladite enceinte, et on évacue de cette dernière une phase liquide appauvrie en micro-particules.

De manière correspondante, l'invention concerne un dispositif comprenant :
a) un contenant dans lequel est ménagée une enceinte, d'un volume déterminé par au moins deux dimensions, par exemple longueur et profondeur, ladite enceinte étant adaptée au confinement d'un échantillon de ladite suspension,
b) des moyens magnétiques extérieurs au contenant, consistant en au moins un arrangement constitué par au moins une pluralité d'aimants élémentaires, distribués selon une demi-configuration dite de Halbach, dont les faces respectives en regard de l'enceinte génèrent une somme vectorielle de champs magnétiques élémentaires, correspondant à un champ magnétique de capture traversant ladite enceinte, et dont les faces respectives opposées ne génèrent aucun champ magnétique
c) des moyens pour générer ledit champ magnétique de capture.

Par demi-configuration dite de Halbach, on entend toute configuration selon laquelle les champs magnétiques élémentaires (ou aimants élémentaires) distribués et alignés selon une même direction, sont tous parallèles ou confondus avec un plan de rotation, ont des directions respectives s'intersectant en un centre commun (O) compris dans ledit plan de rotation, et ont des sens respectifs, rapportés dans ledit plan de rotation, qui s'obtiennent, à partir d'une direction d'origine passant par le centre commun, selon un pas angulaire, correspondant au passage d'un champ magnétique élémentaire, à l'autre adjacent, selon la direction d'alignement desdits champs, moyennant quoi la somme vectorielle desdits champs magnétiques correspond à un champ magnétique résultant (cf. Klaus HALBACH, Nuclear Instruments and Methods Vol p. 1-7, 1980 et Nuclear Instruments and Methods Vol p. 109-117,1981).

La présente invention présente encore les variantes suivantes, concernant le procédé de séparation dynamique par voie humide :
- après la phase (c), on supprime ledit champ magnétique de capture, moyennant quoi on libère ladite phase solide enrichie en micro-particules, par exemple au moyen d'un milieu liquide de relargage.
- les champs magnétiques élémentaires sont alignés selon une dimension de l'enceinte, par exemple la longueur, et la pluralité desdits champs magnétiques élémentaires sont parallèles ou confondus avec un plan dit de rotation desdits champs, contenant par exemple ladite longueur.
- une multiplicité de champs magnétiques élémentaires est distribuée selon une pluralité de rangées réparties selon une troisième dimension, par exemple perpendiculaire à au moins l'une des deux dimensions de l'enceinte.

La présente invention présente encore les variantes suivantes, concernant le dispositif de séparation par voie humide :
- il comprend des moyens pour générer puis supprimer le champ magnétique de capture,
- le contenant a une forme plate, et est obtenu par assemblage d'une plaque dans laquelle est ménagée l'enceinte, et un film plastique rapporté sur la plaque, et les moyens magnétiques sont disposés soit du côté plaque, soit du côté film.
- les aimants élémentaires sont disposés de manière contiguë, ou séparée, les uns par rapport aux autres, selon une dimension d'alignement.
- les aimants élémentaires sont alignés selon une dimension de l'enceinte, par exemple la longueur, et disposés en sorte que la pluralité des champs magnétiques élémentaires, générés par lesdits aimants élémentaires respectivement, sont parallèles ou confondus avec un plan dit de rotation desdits champs, contenant par exemple ladite longueur.
- la multiplicité d'aimants élémentaires est distribuée selon une pluralité de rangées, contiguës ou espacées, distribuées selon une troisième dimension, par exemple perpendiculaire à au moins l'une des dimensions de l'enceinte.

La solution selon la présente invention apporte les avantages déterminants suivants, mis en évidence en particulier par le protocole expérimental décrit ci-après.

Premièrement, la phase solide enrichie en micro-particules est séparée relativement rapidement, par exemple en moins d'une minute, ce qui constitue un avantage appréciable pour la mise en oeuvre automatisée d'un bio-essai, en permettant par exemple d'augmenter la cadence de l'automate d'analyse avec lequel la détermination de l'entité biologique d'intérêt (par exemple) est obtenue.

Deuxièmement, le confinement du champ magnétique de capture permet de concentrer ce dernier, de maximiser son gradient, et d'assurer une bonne rétention de la phase solide précitée dans l'enceinte de séparation, en résistant à la sollicitation hydrodynamique des liquides ou fluides circulant dans l'enceinte de séparation. A cet égard, le taux de pertes en micro-particules peut être inférieur à 1% en poids.

Troisièmement, la quasi-absence de champ magnétique de fuite dans l'enceinte de séparation, lorsque le champ magnétique de capture cesse, permet de remettre facilement les micro-particules en suspension et de manière homogène.

Selon l'art antérieur précédemment identifié, l'enceinte contenant les micro-particules est mobile, alors que, selon l'invention l'enceinte peut être fixe, et les moyens magnétiques peuvent corrélativement se déplacer.

Quatrièmement, selon l'invention, l'énergie magnétique se trouve concentrée d'un seul côté des moyens magnétiques, ce qui évite de recourir à tout blindage de l'autre côté. Cet avantage est essentiel pour un dispositif dans lequel des cartes d'analyse sont mises côte à côte, à faible distance.

Cinquièmement, la localisation et la répartition des micro-particules dans l'enceinte (par exemple, dans un fond de canal d'une carte d'analyse) est mieux définie, et simplifie donc la gestion des cycles de pression durant l'étape de remise en suspension dans un automate de dosage.

S'agissant des cartes d'analyse qui seront considérées ci-après, en particulier adaptées à une utilisation dans un automate, on se référera en particulier à la demande de brevet français FR00/10978 et à la demande internationale WO-A-00178452, dont l'une des Demanderesses est titulaire.

La présente invention est maintenant décrite par référence au dessin annexé, dans lequel :
- la Figure 1 représente, de manière schématique et vue en perspective, un équipement conforme à l'invention, intégrant un dispositif selon l'invention,
- la Figure 2 représente, à échelle plus réduite, le dispositif selon l'invention, vu de face, et correspondant au dispositif représenté à la Figure 1,
- la Figure 3 représente schématiquement, vu en perspective, les moyens magnétiques d'un dispositif selon l'invention,
- la Figure 4 est un tableau représentant, à titre d'exemple, la rotation angulaire pas à pas des champs magnétiques générés par les aimants élémentaires appartenant aux moyens magnétiques représentés à la Figure 3,
- la Figure 5 représente, de la même manière qu'à la Figure 1 un montage expérimental, ayant permis de caractériser les performances obtenues avec un dispositif selon l'invention,
- la Figure 6 représente de manière schématique un dispositif selon l'invention, conforme à celui représenté par référence aux figures 1 et 3, selon lequel deux enceintes sont disposées de part et d'autre des moyens d'aimantation, et pour lequel on a représenté l'évolution en position des micro-particules, en présence du champ magnétique de capture,
- les Figures 7 et 8 représentent respectivement deux autres arrangements ou configurations, avec des aimants élémentaires ayant des sections respectivement hexagonale et circulaire, chacun de ces arrangements étant représenté vu de dessus, à la manière de la Figure 6.

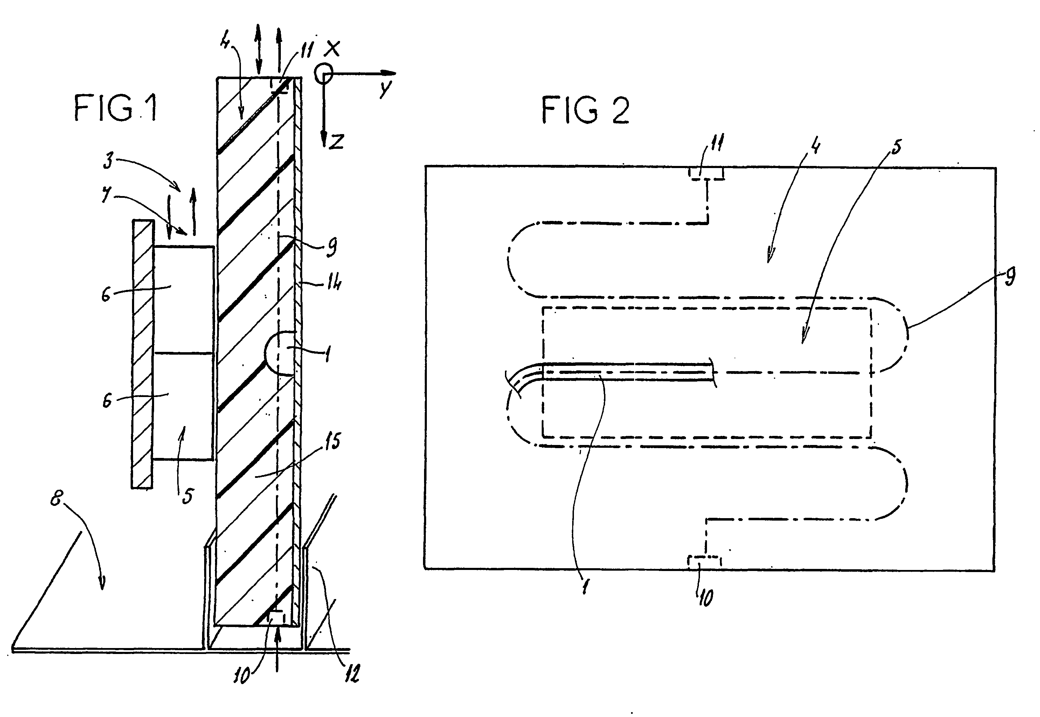

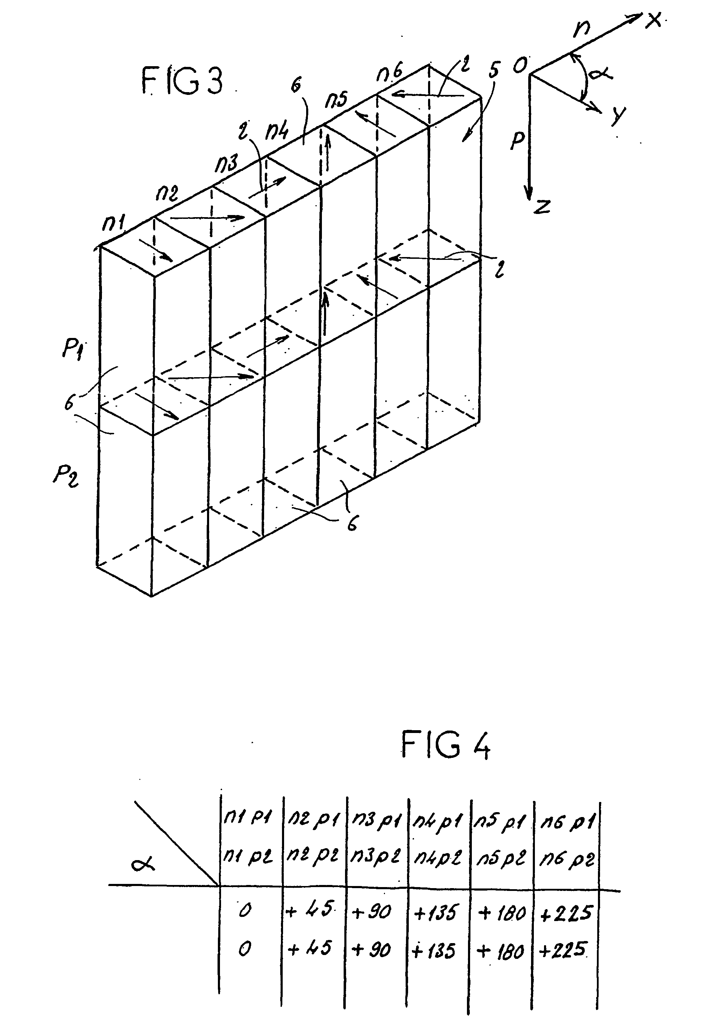

Conformément à la Figure 1, un équipement 8 selon l'invention comprend :
- un ou plusieurs contenants 4, par exemple consommables du type cartes, comprenant chacun un circuit 9 pour la circulation d'une suspension en phase liquide telle que précédemment définie, c'est-à-dire comprenant des micro-particules magnétiques et un milieu liquide de suspension de ces dernières ; appartient à ce contenant, et est intégrée dans le circuit 9, une enceinte 1, de référence ou séparation, dont il sera question ci-après pour expliciter l'invention, et qui communique, grâce au circuit 9, avec au moins une entrée 10 et une sortie 11, disposées dans le contenant 4,
- un support 12 pour disposer, par exemple de manière amovible, le ou les contenants 4, en sorte que l'enceinte 1, par exemple appartenant à un circuit de circulation de la suspension en phase liquide, soit alignée ou parallèle à une dimension de référence Ox, ou longueur, dont il sera question ci-après par référence à la Figure 3,
- des moyens 7 pour générer puis supprimer un champ magnétique de capture, introduit et expliqué par référence aux Figures 3 et 4, consistant en des moyens (représentés schématiquement sur la figure 1) pour déplacer des moyens magnétiques 5, parallèlement à un plan perpendiculaire à une dimension transversale Oy, par exemple profondeur, (cf. Figure 3), d'une position active, dans laquelle le champ magnétique de capture traverse l'enceinte 1, à une position inactive, dans laquelle le champ magnétique de capture est disposé à l'écart de l'enceinte 1.

En pratique, et comme l'homme de métier le sait, le contenant 4, ou consommable du type carte, a une forme plate et parallélépipédique, et est obtenu par assemblage, d'une part d'une plaque 15 en matière plastique, dans laquelle sont obtenus, par exemple par moulage, et le circuit de circulation 9 et l'enceinte ou canal 1, disposés sur au moins un côté de la plaque précitée, et, d'autre part d'un film plastique 14, rapporté, par exemple par collage, sur la plaque 15 ; ce film ferme donc l'ensemble du circuit 9.

Le support 12 dont il a été question est par exemple constitué par le fond d'un tiroir ou « rack », dans lequel sont ménagées des fentes ou autres moyens de maintien amovibles, pour recevoir les différents contenants 4, respectivement selon leurs tranches et verticalement, dans la position exemplifiée à la Figure 1, c'est-à-dire parallèlement au plan xOz (cf. Figure 3), en demeurant espacés les uns des autres.

Un tel support ou tiroir 12 fait partie par exemple d'un automate d'analyse, comprenant par ailleurs les moyens 7, permettant de déplacer en translation verticale, et parallèlement au contenant 4 (dans leur position représentée à la Figure 1), les moyens magnétiques 5 affectés respectivement aux différents contenants 4, et successivement dans leurs positions active et inactive définies précédemment. Ces moyens 7 sont constitués par tous moyens de l'état de la technique, connus de l'homme de métier pour déplacer en translation, de manière réversible, lesdits moyens magnétiques 5.

De manière non représentée, l'équipement précédemment décrit comprend des moyens de circulation de liquides ou autres fluides dans le circuit 9 des différents contenants 4, par exemple des pompes ou autres moyens d'aspiration et/ou de refoulement, et ce par au moins l'entrée 10 et/ou la sortie 11 du circuit 9.

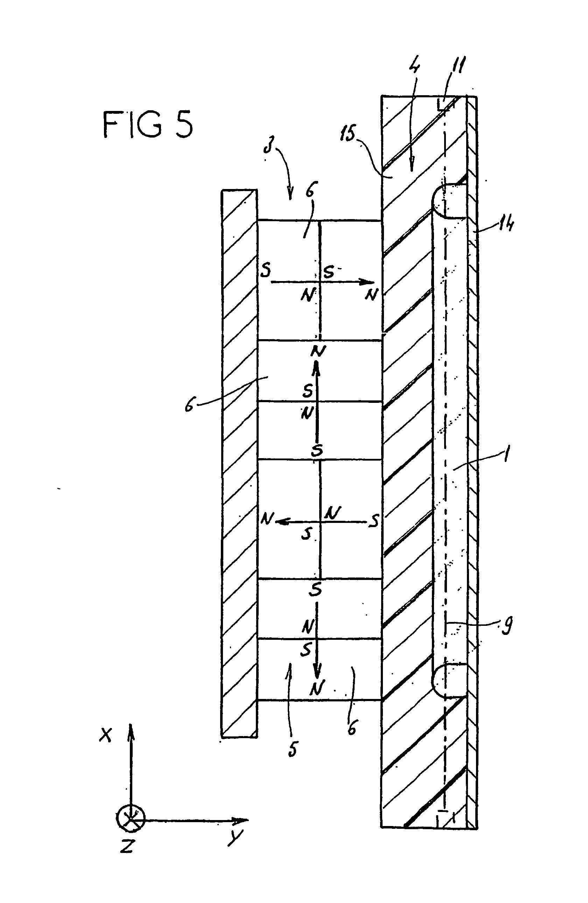

Toujours de manière non représentée, les moyens de circulation précités sont agencés et/ou programmés pour effectuer dans l'enceinte 1, dont il sera question ci-après, les étapes suivantes, à savoir successivement :
- dans la position active des moyens magnétiques 5, représentés par exemple aux Figures 1 et 5, l'échantillon, par exemple biologique, est mis en circulation dans et au travers de l'enceinte 1, pour :
   ◆ séparer dans ladite enceinte une phase ou fraction solide enrichie en micro-particules, et donc en entités biologiques d'intérêt initialement présentes dans ledit échantillon, ayant été capturées par les réactifs ou entités portés par les micro-particules,
   ◆ et rejeter de la même enceinte, par exemple comme surnageant, une phase ou fraction liquide appauvrie en micro-particules, et donc en entités biologiques d'intérêt,
- éventuellement, toujours dans la même position active des moyens magnétiques 5, une phase liquide de lavage circule dans l'enceinte 1, au contact de la phase solide enrichie en micro-particules, et donc en entités biologiques d'intérêt,
- éventuellement, soit dans la position inactive des moyens magnétiques 5, la phase solide enrichie en micro-particules, et donc en entités biologiques d'intérêt, est libérée puis relarguée, par exemple par circulation d'une phase liquide de remise en suspension, soit dans la position active des mêmes moyens magnétiques 5, les entités biologiques d'intérêt sont séparées des micro-particules et libérées dans une phase liquide de capture, alors que les micro-particules demeurent piégées par les moyens magnétiques 5 ; dans ce dernier cas, les entités biologiques libérées peuvent ensuite être déplacées, par exemple avec les moyens de circulation précédemment définis, pour réaliser d'autres opérations telles que transferts, réactions, etc...

Tel est l'environnement technique dans lequel s'intègre un dispositif selon l'invention, pour la mise en oeuvre du procédé selon la même invention.

Comme représenté à la Figure 1, un dispositif 3 selon l'invention, de séparation dynamique par voie humide de la suspension précédemment définie, comprend ou associe :
a) le contenant 4, qui dans la pratique peut être jetable, dans lequel est ménagée l'enceinte 1, sachant que de manière générale le volume de cette dernière est déterminé par au moins deux dimensions, à savoir une dimension de référence Ox, par exemple longueur, selon laquelle l'enceinte 1 ou canal est disposé, et une transversale Oy, ou perpendiculaire à la dimension de référence précitée (cf. référentiel de la Figure 3), par exemple la profondeur de l'enceinte 1 ; cette enceinte 1 étant de manière générale adaptée au confinement d'un échantillon de la suspension, en vue de sa séparation élémentaire ultérieurement décrite,
b) les moyens magnétiques 5, disposés extérieurement au contenant 4, consistant, comme représenté à la Figure 3, en un arrangement constitué par deux pluralités (2n) et (2p) d'aimants élémentaires 6, distribués selon une dimension prédéterminée, en l'occurrence Ox, ces deux pluralités étant superposées selon une autre dimension Oz, ou dimension transversale, en sorte de générer par la somme vectorielle des champs magnétiques élémentaires 2, générés respectivement par lesdits aimants élémentaires 6, un champ magnétique de capture traversant l'enceinte 1, et exerçant sur les micro-particules une attraction magnétique, dont une composante majoritaire, par exemple la totalité, est dirigée selon la dimension transversale Oz,
c) les moyens 7 (schématisés à la Figure 1), pour générer puis supprimer le champ magnétique de capture, moyennant quoi la phase solide enrichie en micro-particules est capturée puis libérée dans l'enceinte 1.

Selon la présente invention, par référence à la Figure 3 et au tableau selon Figure 4, les aimants élémentaires 6 sont alignés selon la dimension de référence Ox, et disposés en sorte de générer respectivement des champs magnétiques élémentaires 2, parallèles ou confondus avec un plan dit de rotation, en l'occurrence Oxy. La rotation des champs magnétiques élémentaires 2, correspondant au passage d'un aimant élémentaire 6 à un autre adjacent, est une rotation pas à pas, de même sens, et selon un pas angulaire constant. Moyennant quoi, on génère un champ magnétique de capture, du fait de la somme vectorielle desdits champs magnétiques élémentaires 2.

Les aimants élémentaires 6 sont disposés de manière contiguë, conformément à la Figure 3, mais ils peuvent être distribués et séparés les uns par rapport aux autres, selon la dimension de référence Ox.

Chaque aimant élémentaire 6 a une forme prismatique, par exemple à base carrée (comme montré à la Figure 3), hexagonale, circulaire.

Selon l'invention, pour un canal de direction Ox, les aimants élémentaires 6 sont alignés selon cette direction Ox, et le plan de rotation des champs magnétiques élémentaires contient l'axe Ox.

Le dispositif précédemment décrit dans ses principes, permet de mettre en oeuvre une étape de séparation dynamique par voie humide, d'une suspension en phase liquide de micro-particules magnétiques, comme suit :
a) on confine la suspension dans l'enceinte 1, par exemple grâce aux moyens de circulation prévus dans l'équipement décrit précédemment,
b) grâce aux aimants 6, on dispose d'au moins une pluralité ou multiplicité de champs magnétiques élémentaires 2, distribués selon une direction prédéterminée (Ox ou Oz), par rapport aux dimensions de référence Ox et transversale Oy, en sorte de générer, par la somme vectorielle desdits champs magnétiques élémentaires, le champ magnétique de capture, lequel traverse l'enceinte 1 et exerce sur les micro-particules à séparer une attraction magnétique, dont une composante majoritaire, par exemple la totalité, est dirigée selon la dimension transversale Oy,
c) dans la position active des moyens magnétiques 5, on génère le champ magnétique de capture, moyennant quoi la phase solide enrichie en micro-particules est capturée dans l'enceinte 1, et on évacue en même temps de cette dernière la phase liquide appauvrie en micro-particules,
d) dans la position inactive des moyens magnétiques 5, on supprime le champ magnétique de capture, moyennant quoi on libère la phase solide enrichie en micro-particules, par exemple au moyen d'un liquide de relargage ou de remise en suspension.

Pendant la phase (b), afin de limiter le nombre d'aimants élémentaires 6, alignés selon la direction Ox, la séparation magnétique peut également s'effectuer, si la longueur du segment liquide dans l'enceinte 1 est suffisante par rapport à la longueur occupée par les aimants 6, de manière dynamique, en effectuant des balayages (aller-retour) dudit segment liquide devant l'assemblage d'aimants.

### Exemple 1 :

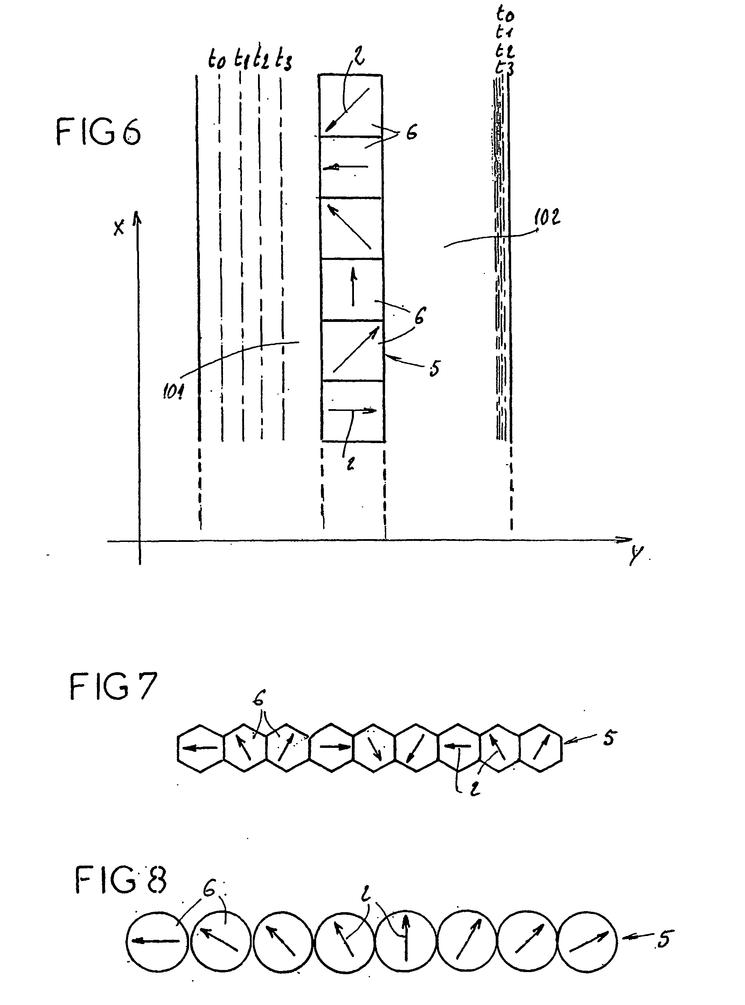

Conformément à la Figure 6, deux enceintes 101 et 102 sont disposées de part et d'autre des moyens magnétiques 5, et la même suspension de micro-particules est présente dans chacune desdites enceintes. En présence du champ magnétique de capture, au cours du temps, dans l'enceinte 101, les micro-particules migrent selon un front se rapprochant du moyen magnétique 5, alors que dans l'enceinte 102, les micro-particules stagnent selon un front à l'écart des moyens magnétiques 5.

Le nombre d'aimants élémentaires 6 alignés selon la direction de référence, par exemple Ox selon les Figures 1 et 3, n'est pas un paramètre contraignant. Ce nombre doit simplement être adapté au champ magnétique et à l'encombrement requis.

Par exemple, selon la Figure 5, il y a quatre aimants élémentaires 6, parce que la rotation qui a été précédemment définie a un pas de 90° , et qu'avec quatre aimants on réalise une révolution.

Selon la Figure 3, il y en a six ; huit peuvent être disposés pour obtenir une rotation complète des champs magnétiques élémentaires 2, avec un pas de rotation de 45°.

L'arrangement représenté à la Figure 7, de par exemple neuf aimants élémentaires 6, avec un pas de rotation de 60°, permet d'optimiser l'encombrement et le coût des aimants élémentaires, car il n'y a pas de perte de matériau magnétique à la découpe.

L'arrangement représenté à la Figure 8, de par exemple huit aimants élémentaires 6, avec un pas de rotation quelconque, est convenable, mais quand le pas de rotation diminue, la portée du champ magnétique de capture augmente, mais l'encombrement est plus important.

### Exemple 2 :

Conformément à la Figure 5, on obtient un arrangement selon l'invention avec des aimants élémentaires 2 de forme cubique (4x4x4 millimètres), tels que disponibles auprès de la Société BINDER MAGNETIC, sous la référence commerciale NEUU.

Les moyens magnétiques 5 ainsi obtenus sont disposés par rapport à un canal ou enceinte 1 de référence, comme montré par les Figures 1 et 2.

La concentration en micro-particules est mesurée sur tout effluent, c'est-à-dire flux liquide sortant par la sortie 11 du contenant ou carte 4, au moyen d'un spectrophotomètre, permettant de mesurer la densité optique à 875 nm.

On met en oeuvre le protocole de circulation précédemment décrit, avec des micro-particules de la marque SERADYN, avec une suspension initiale à 0,25 µg/µl, le volume injecté étant de 50 µl. 25 µl de surnageant sont récupérés par la sortie 11, dont on mesure la densité optique.

Les déplacements de liquide sont obtenus dans le contenant ou carte 4, au moyen d'une seringue connectée à l'entrée 10.

On mesure la durée de séparation magnétique, d'une part, et la densité optique obtenue, après dilution au 1/16, d'autre part, tout d'abord avec des moyens magnétiques traditionnels, consistant en un aimant simple, et d'autre part avec la configuration des moyens magnétiques représentée à la Figure 5.

Les résultats obtenus sont montrés dans le tableau ci-après.

| | D.O. mesurée à 875 nm avec dilution 1/16 | |
|---|---|---|
| Durée de séparation magnétique | Configuration aimant simple | Configuration selon Figure 5 |
| 15 sec | 0,076 | 0,012 |
| 30 sec | 0,013 | 0,0089 |
| 45 sec | 0,029 | 0,0095 |
| 1 mn | 0,012 | 0,003 |

Quelques mesures réalisées avec une concentration en micro-particules beaucoup plus faible, par exemple de 1 µg/µl, montrent une différence encore plus nette entre les valeurs de densité optique, obtenues respectivement par des moyens magnétiques traditionnels, et des moyens magnétiques selon l'invention.

Grâce à l'arrangement selon la Figure 5, visuellement, on note que le surnageant devient rapidement clair, dans un temps égal à 1 minute. On observe également une répartition des micro-particules dans le canal ou enceinte 1, moins diffuse avec la disposition selon Figure 5, qu'avec une disposition traditionnelle.

On note que la valeur de la D.O. à 1 minute, obtenue avec un arrangement particulièrement simple, est égale à celle obtenue avec l'arrangement selon la Figure 5, après seulement 12 secondes.

La disposition selon Figure 5 permet de confiner les micro-particules dans une zone mieux délimitée correspondant en pratique uniquement au canal ou enceinte 1 de séparation.

## Revendications

1. Procédé de séparation dynamique par voie humide, d'une suspension en phase liquide, comprenant des micro-particules comprenant un matériau magnétique, et un milieu liquide dans lequel lesdites particules sont en suspension, procédé selon lequel :
a) on confine la suspension dans une enceinte (1) d'un volume déterminé par au moins deux dimensions, par exemple longueur et profondeur,
b) on dispose d'au moins une pluralité de champs magnétiques élémentaires (2n, 2p), distribués selon une demi-configuration dite de Halbach, dont les extrémités respectives en regard de l'enceinte (1), génèrent une somme vectorielle desdits champs magnétiques élémentaires, correspondant à un champ magnétique de capture traversant ladite enceinte (1), et exerçant sur les micro-particules une attraction magnétique, et dont les extrémités respectives opposées ne génèrent aucun champ magnétique.
c) on génère ledit champ magnétique de capture, moyennant quoi une phase solide enrichie en micro-particules est capturée dans ladite enceinte (1), et on évacue de cette dernière une phase liquide appauvrie en micro-particules.

2. Procédé selon la revendication 1, **caractérisé en ce que**, après la phase (c), on supprime ledit champ magnétique de capture, moyennant quoi on libère ladite phase solide enrichie en micro-particules, par exemple au moyen d'un milieu liquide de relargage.

3. Procédé selon la revendication 1, **caractérisé en ce que** les champs magnétiques élémentaires (2n,2p) sont alignés selon une dimension de l'enceinte (1), par exemple la longueur, et la pluralité desdits champs magnétiques élémentaires sont parallèles ou confondus avec un plan dit de rotation desdits champs, contenant par exemple ladite longueur.

4. Procédé selon la revendication 1, **caractérisé en ce qu'**une multiplicité de champs magnétiques élémentaires (2) est distribuée selon une pluralité de rangées réparties selon une troisième dimension, par exemple perpendiculaire à au moins une des deux dimensions de l'enceinte (1).

5. Dispositif (3) de séparation dynamique par voie humide d'une suspension en phase liquide, comprenant des micro-particules comprenant un matériau magnétique, et un milieu liquide dans lequel lesdites particules sont en suspension, ledit dispositif comprenant :
a) un contenant (4) dans lequel est ménagée une enceinte (1), d'un volume déterminé par au moins deux dimensions, par exemple longueur et profondeur, ladite enceinte étant adaptée au confinement d'un échantillon de ladite suspension,
b) des moyens magnétiques (5) extérieurs au contenant (4), consistant en au moins un arrangement constitué par au moins une pluralité 2n, 2p) d'aimants élémentaires (6), distribués selon une demi-configuration dite de Halbach, dont les faces respectives en regard de l'enceinte (1) génèrent une somme vectorielle de champs magnétiques élémentaires, correspondant à un champ magnétique de capture traversant ladite enceinte, et dont les faces respectives opposées ne génèrent aucun champ magnétique
c) des moyens pour générer ledit champ magnétique de capture.

6. Dispositif selon la revendication 5, **caractérisé en ce qu'**il comprend des moyens (7) pour générer puis supprimer le champ magnétique de capture.

7. Dispositif selon la revendication 5, selon lequel le contenant (4) a une forme plate, et est obtenu par assemblage d'une plaque (15) dans laquelle est ménagée l'enceinte (1), et un film plastique (14) rapporté sur la plaque, **caractérisé en ce que** les moyens magnétiques (5) sont disposés soit du côté plaque (15), soit du côté film (14).

8. Dispositif selon la revendication 5, **caractérisé en ce que** les aimants élémentaires (6) sont disposés de manière contiguë, ou séparée, les uns par rapport aux autres, selon une dimension d'alignement.

9. Dispositif selon la revendication 5, **caractérisé en ce que** chaque aimant élémentaire (6) a une forme prismatique, par exemple à base carrée ou rectangulaire.

10. Dispositif selon la revendication 5, **caractérisé en ce que** les aimants élémentaires (6) sont alignés selon une dimension de l'enceinte (1), par exemple la longueur, et disposés en sorte que la pluralité des champs magnétiques élémentaires, générés par lesdits aimants élémentaires respectivement, sont parallèles ou confondus avec un plan dit de rotation desdits champs, contenant par exemple ladite longueur.

11. Dispositif selon la revendication 5, **caractérisé en ce que** la multiplicité d'aimants élémentaires (6) est répartie selon une pluralité de rangées (p), contiguës ou espacées, distribuées selon une troisième dimension, par exemple perpendiculaire à au moins l'une des dimensions de l'enceinte (1).

12. Equipement (8) pour la mise en oeuvre d'un dispositif selon l'une quelconque des revendications 5 à 11, **caractérisé en ce que** :
- le contenant (4), par exemple un consommable du type carte, comprend un circuit (9) pour la circulation d'au moins la suspension en phase liquide, auquel appartient ladite enceinte (1), et qui communique avec au moins une entrée (10) et une sortie (11),
- il est prévu un support (12) pour disposer, par exemple de manière amovible, ledit contenant (4), en sorte que l'enceinte (1), par exemple un canal de circulation, soit aligné ou parallèle à la direction du champ magnétique de capture,
- éventuellement des moyens (7) pour générer puis supprimer le champ magnétique de capture, consistent par exemple en des moyens pour déplacer les moyens magnétiques (5), d'une position active, dans laquelle le champ magnétique de capture est généré au travers de ladite enceinte, à une position inactive dans laquelle le champ magnétique de capture est disposé à l'écart de ladite enceinte.

13. Equipement selon la revendication 12, **caractérisé en ce qu'**il comprend des moyens de circulation de liquides dans le circuit (9) du contenant (4), par exemple pompes d'aspiration et/ou de refoulement, par l'entrée (10) et/ou la sortie (11) dudit circuit.

14. Equipement selon la revendication 12, **caractérisé en ce que** les moyens de circulation sont agencés et/ou programmés pour effectuer dans l'enceinte (1), les étapes suivantes, successivement :
- dans la position active des moyens magnétiques, la suspension est mise en circulation dans l'enceinte, pour séparer dans cette dernière la phase solide enrichie en micro-particules, et rejeter de ladite enceinte, par exemple comme surnageant, la phase liquide appauvrie en micro particules,
- éventuellement, dans la position active des moyens magnétiques (5), une phase liquide de lavage circule dans l'enceinte (1), au contact de la phase solide enrichie en micro-particules,
- éventuellement dans la position inactive des moyens magnétiques (5), la phase solide enrichie en micro-particules, libérée, est relarguée, par circulation d'une phase liquide de remise en suspension.

## Patentansprüche

1. Verfahren zur dynamischen Nasstrennung einer sich in flüssiger Phase befindlichen Suspension, die Mikropartikel mit einem magnetischen Material und ein flüssiges Milieu aufweist, in dem sich die Partikel in Suspension befinden, wobei gemäß dieses Verfahrens:
a) die Suspension in einem Raum (1) eines Volumens, das durch zumindest zwei Dimensionen bestimmt wird, beispielsweise Länge und Tiefe, eingegrenzt wird,
b) zumindest eine Vielzahl von Elementarmagnetfeldern (2n, 2p) angelegt werden, die gemäß einer sog. Halbach-Halb-Konfiguration verteilt sind, deren jeweilige Enden in Bezug auf den Raum (1) eine Vektorsumme der Elementarmagnetfelder entsprechend eines zu dem Raum (1) quer verlaufenden Fängermagnetfeldes erzeugen und auf die Mikropartikel eine magnetische Anziehungskraft ausüben, wobei deren jeweilige gegenüberliegende Enden kein Magnetfeld erzeugen,
c) das Fängermagnetfeld erzeugt wird, wodurch eine feste Phase, die mit Mikropartikeln angereichert ist, in dem Raum (1) eingefangen wird, und von Letzterem eine flüssige Phase abgeführt wird, die an Mikropartikeln verarmt ist.

2. Verfahren nach Anspruch 1, **dadurch gekennzeichnet, dass** nach Schritt (c) das Fängermagnetfeld aufgehoben wird, wodurch die feste Phase, die mit Mikropartikeln angereichert ist, freigesetzt wird, beispielsweise unter Zuhilfenahme eines flüssigen Milieus zum Aussalzen.

3. Verfahren nach Anspruch 1, **dadurch gekennzeichnet, dass** die Elementarmagnetfelder (2n, 2p) gemäß einer Dimension des Raumes (1), beispielsweise der Länge, ausgerichtet sind, und die Vielzahl der Elementarmagnetfelder parallel sind oder mit einer sog. Drehebene der Felder zusammenfallen, die beispielsweise die Länge enthält.

4. Verfahren nach Anspruch 1, **dadurch gekennzeichnet, dass** eine Vielzahl von Elementarmagnetfeldern (2) gemäß einer Vielzahl von Reihen verteilt ist, die gemäß einer dritten Dimension angeordnet sind, beispielsweise rechtwinklig zu zumindest einer der beiden Dimensionen des Raumes (1).

5. Vorrichtung (3) zur dynamischen Nasstrennung einer sich in flüssiger Phase befindlichen Suspension, die Mikropartikel mit einem magnetischen Material und ein flüssiges Milieu aufweist, in dem sich die Partikel in Suspension befinden, wobei die Vorrichtung Folgendes aufweist, nämlich:
a) ein Behältnis (4), in dem ein Raum (1) mit einem durch zumindest zwei Dimensionen, beispielsweise Länge und Tiefe, bestimmten Volumen vorgesehen ist, wobei der Raum zur Eingrenzung einer Probe der Suspension eingerichtet ist,
b) magnetische Mittel (5) außerhalb des Behältnisses (4), die aus zumindest einer Anordnung bestehen, die durch zumindest eine Vielzahl (2n, 2p) von Elementarmagneten (6) gebildet sind, die gemäß einer sog. Halbach-Semi-Konfiguration verteilt sind, deren jeweilige Seiten in Bezug auf den Raum (1) eine Vektorsumme von Elementarmagnetfeldern erzeugen, die einem Fängermagnetfeld, das durch den Raum hindurchgeht, entsprechen, wobei deren jeweilige gegenüberliegende Seiten kein Magnetfeld erzeugen,
c) Mittel zur Erzeugung des Fängermagnetfeldes.

6. Vorrichtung nach Anspruch 5, **dadurch gekennzeichnet, dass** es Mittel (7) zur Erzeugung und anschließenden Aufhebung des Fängermagnetfeldes aufweist.

7. Vorrichtung nach Anspruch 5, bei der das Behältnis (4) eine flache Form hat und die durch Zusammenbau einer Platte (15), in der der Raum (1) vorgesehen ist, mit einem Kunststoffstreifen (14) erhalten wird, der auf die Platte aufgesetzt ist, **dadurch gekennzeichnet, dass** die magnetischen Mittel (5) entweder auf der Seite der Platte (15) oder auf der Seite des Streifens (14) angeordnet sind.

8. Vorrichtung nach Anspruch 5, **dadurch gekennzeichnet, dass** die Elementarmagneten (6) gemäß einer Ausrichtungsdimension in Bezug aufeinander benachbart oder separat angeordnet sind.

9. Vorrichtung gemäß Anspruch 5, **dadurch gekennzeichnet, dass** jeder Elementarmagnet (6) eine prismatische Form hat, beispielsweise auf viereckiger oder rechteckiger Basis.

10. Vorrichtung gemäß Anspruch 5, **dadurch gekennzeichnet, dass** die Elementarmagneten (6) gemäß einer Dimension des Raumes (1), beispielsweise der Länge, ausgerichtet sind und derart angeordnet sind, dass die Vielzahl der Elementarmagnetfelder, die durch die jeweiligen Elementarmagneten erzeugt werden, parallel sind oder mit einer sog. Rotationsebene der Felder zusammenfallen, die beispielsweise die Länge enthält.

11. Vorrichtung gemäß Anspruch 5, **dadurch gekennzeichnet, dass** die Vielzahl der Elementarmagneten (6) gemäß einer Vielzahl von benachbarten oder beabstandeten Reihen (p) angeordnet ist, die gemäß einer dritten Dimension verteilt sind, beispielsweise rechtwinklig zu zumindest einer der Dimensionen des Raumes (1).

12. Einrichtung (8) zur Verwendung einer Vorrichtung gemäß einem der Ansprüche 5 bis 11, **dadurch gekennzeichnet, dass**:
- das Behältnis (4), beispielsweise ein Verbrauchsmaterial von Kartentyp, einen Kreislauf (9) zur Zirkulation von zumindest der sich in flüssiger Phase befindlichen Suspension aufweist, der zu dem Raum (1) gehört, und der mit zumindest einem Einlass (10) und einem Auslass (11) in Verbindung steht,
- eine Halterung (12) vorgesehen ist, um beispielsweise abnehmbar das Behältnis (4) derart anzuordnen, dass der Raum (1), beispielsweise ein Zirkulationskanal, ausgerichtet oder parallel zu der Richtung des Fängermagnetfeldes angeordnet ist,
- ggf. Mittel (7) zur Erzeugung und anschließenden Aufhebung des Fängermagnetfeldes vorgesehen sind, bestehend beispielsweise aus Mitteln zum Verschieben der magnetischen Mittel (5) von einer aktiven Position, in der das Fängermagnetfeld durch den Raum hindurch erzeugt wird, in eine inaktive Position, in der das Fängermagnetfeld von dem Raum entfernt ist.

13. Einrichtung gemäß Anspruch 12, **dadurch gekennzeichnet, dass** sie Mittel zur Zirkulation von Flüssigkeiten in dem Kreislauf (9) des Behältnisses (4) durch den Einlass (10) und/oder den Auslass (11) des Kreislaufes aufweist, beispielsweise Saug- und/oder Druckpumpen.

14. Einrichtung gemäß Anspruch 12, **dadurch gekennzeichnet, dass** die Zirkulationsmittel eingerichtet und/oder programmiert sind, um in dem Raum (1) die folgenden Schritte nacheinander durchzuführen:
- in der aktiven Position der magnetischen Mittel wird die Suspension in dem Raum in Zirkulation versetzt, um in dem Letzteren die feste Phase, die mit Mikropartikeln angereichert ist, von der flüssigen Phase, die an Mikropartikeln verarmt ist, abzutrennen und von dem Raum zu verwerfen, beispielsweise als Überstand,
- ggf. wird in der aktiven Position der magnetischen Mittel (5) eine flüssige Waschphase in dem Raum (1) in Kontakt zu der festen Phase, die mit Mikropartikeln angereichert ist, zirkulieren gelassen,
- ggf. wird in der inaktiven Position der magnetischen Mittel (5) die freigesetzte feste Phase, die angereichert ist mit Mikropartikeln, durch Zirkulation einer resuspendierten flüssigen Phase ausgesalzen.

## Claims

1. Method for the wet dynamic separation of a suspension in liquid phase, comprising microparticles comprising a magnetic material and a liquid medium in which said microparticles are in suspension, in which method:
a) the suspension is confined in a chamber (1) having a volume defined by at least two dimensions, for example length and depth;
b) at least one plurality of elementary magnetic fields (2n, 2p) is set up, these magnetic fields being distributed in a "Halbach semi-configuration", whose respective ends facing the chamber (1) generate a vector sum of said elementary magnetic fields, corresponding to a magnetic capture field passing through said chamber (1) and exerting a magnetic attraction on the microparticles, and whose opposite respective ends generate no magnetic field; and
c) said capture magnetic field is generated, whereby a solid phase enriched with microparticles is captured in said chamber (1), and a liquid phase depleted in microparticles is extracted from said chamber.

2. Method according to Claim 1, **characterized in that**, after phase c), said capture magnetic field is removed, whereby said solid phase enriched with microparticles is released, for example by means of a liquid releasing medium.

3. Method according to Claim 1, **characterized in that** the elementary magnetic fields (2n, 2p) are aligned along one dimension of the chamber (1), for example the length, and the plurality of said elementary magnetic fields are parallel or coincident with a plane known as the plane of rotation of said fields, for example containing said length.

4. Method according to Claim 1, **characterized in that** a multiplicity of elementary magnetic fields (2) is distributed in a plurality of rows, distributed along a third dimension, for example perpendicular to at least one of the two dimensions of the chamber (1).

5. Device (3) for the wet dynamic separation of a suspension in liquid phase, comprising microparticles comprising a magnetic material and a liquid medium in which said microparticles are in suspension, said device comprising:
a) a container (4) in which a chamber (1) is formed, having a volume defined by at least two dimensions, for example length and depth, said chamber being suitable for confining a specimen of said suspension;
b) magnetic means (5) external to the container (4), consisting of at least one arrangement formed by at least one plurality (2n, 2p) of elementary magnets (6), said magnets being distributed in a "Halbach semi-configuration", whose respective faces facing the chamber (1) generate a vector sum of elementary magnetic fields, corresponding to a capture magnetic field passing through said chamber, and whose opposite respective faces generate no magnetic field; and
c) means for generating said capture magnetic field.

6. Device according to Claim 5, **characterized in that** it includes means (7) for generating and then removing the capture magnetic field.

7. Device according to Claim 5, in which the container (4) has a flat shape and is obtained by assembly of a plate (15), in which the chamber (1) is made, and of a plastic film (14) attached to the plate, **characterized in that** the magnetic means (5) are placed either on the plate (15) side or on the film (14) side.

8. Device according to Claim 5, **characterized in that** the elementary magnets (6) are placed along an alignment direction so as to be contiguous with one another or to be separated from one another.

9. Device according to Claim 5, **characterized in that** each elementary magnet (6) has a prismatic shape, for example with a square or rectangular base.

10. Device according to Claim 5, **characterized in that** the elementary magnets (6) are aligned along one dimension of the chamber (1), for example the length, and placed in such a way that the plurality of elementary magnetic fields, generated by said respective elementary magnets, are parallel to or coincident with a plane known as the plane of rotation of said fields, for example containing said length.

11. Device according to Claim 5, **characterized in that** the multiplicity of elementary magnets (6) is distributed in a plurality of contiguous or spaced-apart rows (p) distributed along a third dimension, for example perpendicular to at least one of the dimensions of the chamber.

12. Apparatus for the use of a device according to any one of Claims 5 to 11, **characterized in that**:
- the container (4), for example a consumable of the card type, comprises a circuit (9) for the circulation of at least one suspension in liquid phase, to which said chamber (1) belongs, and which is connected to at least one inlet (10) and one outlet (11) ;
- a support (12) is provided for positioning, for example removably, said container (4) in such a way that the chamber, for example a circulation channel, is aligned with or is parallel to the direction of the capture magnetic field; and
- optionally, means (7) for generating the capture magnetic field and then for removing it, consist for example of means for moving the magnetic means (5) from an active position, in which the capture magnetic field is generated across said chamber, to an inactive position, in which the capture magnetic field is placed away from said chamber.

13. Apparatus according to Claim 12, **characterized in that** it includes means for circulating liquids in the circuit (9) of the container (4), for example suction and/or delivery pumps, via the inlet (10) and/or the outlet (11) of said circuit.

14. Apparatus according to Claim 12, **characterized in that** the circulation means are designed and/or programmed to carry out in the chamber (1), in succession, the following steps:
- when the magnetic means are in the active position, the suspension is made to circulate in the chamber in order to separate, in the latter, the solid phase enriched with microparticles and to discharge from said chamber, for example as supernatant, the liquid phase depleted in microparticles;
- optionally, when the magnetic means (5) are in the active position, a liquid washing phase circulates in the chamber (1) in contact with the solid phase enriched with microparticles; and
- optionally, when the magnetic means (5) are in the inactive position, the solid phase enriched with microparticles is released by circulating a liquid phase for putting these microparticles back into suspension.
